(19) **Europäisches Patentamt European Patent Office Office européen des brevets**

(11) **EP 2 274 740 B1**

(12) # FASCICULE DE BREVET EUROPEEN

(45) Date de publication et mention de la délivrance du brevet:
**28.10.2015 Bulletin 2015/44**

(21) Numéro de dépôt: **09754054.6**

(22) Date de dépôt: **06.04.2009**

(51) Int Cl.:
*G10K 11/168* (2006.01)   *E04B 1/86* (2006.01)
*B64C 1/40* (2006.01)   *B60R 13/08* (2006.01)

(86) Numéro de dépôt international:
**PCT/FR2009/000402**

(87) Numéro de publication internationale:
**WO 2009/144404 (03.12.2009 Gazette 2009/49)**

(54) **PANNEAU D'ISOLATION ACOUSTIQUE**

SCHALLDÄMMPLATTE

SOUNDPROOFING PANEL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **07.04.2008 FR 0801916**

(43) Date de publication de la demande:
**19.01.2011 Bulletin 2011/03**

(73) Titulaire: **Hutchinson**
**75008 Paris (FR)**

(72) Inventeurs:
• **BEAUVILAIN, Thierry**
**F-45290 Varennes Changy (FR)**
• **MAUPETIT, David**
**F-45210 Griselles (FR)**

• **FAGEARDIE, Sylvie**
**F-45200 Amilly (FR)**
• **PALLUAU, Benoît**
**F-45200 Amilly (FR)**

(74) Mandataire: **Bolinches, Michel Jean-Marie et al Cabinet Orès**
**36, rue de St Pétersbourg**
**75008 Paris (FR)**

(56) Documents cités:
| | |
|---|---|
| **EP-A- 1 612 768** | **EP-A- 1 792 725** |
| **DE-A1- 10 341 158** | **FR-A- 2 896 331** |
| **JP-A- 5 046 180** | **US-A- 1 865 424** |
| **US-A- 4 130 682** | **US-A- 4 702 046** |
| **US-A- 4 989 688** | |

EP 2 274 740 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention concerne un panneau d'isolation acoustique.

Ce type de panneau est utilisé pour l'isolation acoustique d'un milieu par rapport à un autre, par exemple entre un moteur et une cabine destinée à recevoir des passagers. Ces panneaux peuvent être utilisés dans des hélicoptères, des avions, des automobiles, des bâtiments, ou des locaux dans lesquels une isolation acoustique est nécessaire.

Plusieurs types de systèmes isolants existent. Un premier type comprend plusieurs épaisseurs dont la dernière est constituée par un panneau d'habillage ou « panneau de parement ». Il est souvent difficile de faire tenir les différentes épaisseurs de matériaux entre elles, notamment lorsqu'il s'agit de couches de laine de verre ou de mousse. En outre, lorsque cet empilement est constitué, sa tenue mécanique est généralement insuffisante pour permettre la fixation d'autres éléments.

Pour résoudre ce problème, il a été proposé des systèmes acoustiques comprenant deux panneaux de parement rigides entre lesquels un matériau isolant acoustique est disposé. Un tel système est par exemple décrit dans le document WO 2007/080335. Mais cette solution présente trois inconvénients principaux : la rigidité apportée par le deuxième panneau de parement ne suffit pas toujours à conférer la rigidité requise pour l'utilisation souhaitée. Par ailleurs, ces systèmes acoustiques présentent des "creux" d'isolation à certaines fréquences de bruit. Enfin, le deuxième panneau de parement n'améliore pas significativement l'absorption du bruit, sauf à choisir des parements très épais, ce qui peut être rédhibitoire en termes d'encombrement, de poids et de coûts.

Pour améliorer la rigidité des structures précédentes, il a déjà été proposé, dans le document JP 10037341, d'interposer entre les deux panneaux de parement une structure rigide grillagée agencée pour maintenir les deux panneaux de parement écartés l'un de l'autre de manière rigide, et pour que du matériau absorbant acoustique puisse être intercalé entre les deux panneaux de parement et à travers la structure grillagée. Cette structure grillagée est constituée par deux grilles planes fixées chacune à un seul panneau de parement et séparées par des éléments de liaison ondulés fixés aux deux grilles planes. Cette structure est constituée par des tiges métalliques rigides et permet de réduire la transmission mécanique entre le matériau absorbant et les panneaux de parement. L'absorption acoustique est un peu améliorée mais au détriment de la masse du panneau d'isolation. En outre, la fonction d'absorption acoustique est assurée uniquement par le matériau disposé entre les deux panneaux de parement et dans la structure grillagée, l'utilisation d'un tel matériau étant déjà connu pour cette fonction. Enfin, la rigidité n'est que faiblement améliorée.

Le document US1865424 décrit un panneau mural comprenant deux panneaux de parement fixés de part et d'autre d'une structure maillée. Ce panneau est dépourvu de matériau d'absorption.

L'invention vise à améliorer les panneaux d'isolation acoustiques de l'état de la technique en proposant un panneau d'isolation rigide, léger, et dont les performances d'absorption acoustique sont améliorées grâce à l'utilisation d'une structure maillée participant à la fonction d'absorption du bruit.

A cette fin, la présente invention a pour objet un panneau d'isolation acoustique comprenant deux panneaux de parement séparés par une structure pleine sensiblement plane et présentant deux faces sensiblement planes et parallèles, chacune d'elles étant solidaire d'un panneau de parement, ladite structure comprenant des trous traversants formant un maillage de telle sorte que la structure maillée participe à la fonction d'absorption du bruit.

Selon d'autres modes de réalisation :

- la structure maillée peut comprendre, en outre, au moins un matériau absorbant acoustique ;

- la structure maillée peut comprendre au moins une couche d'un matériau absorbant acoustique ;

- la structure maillée peut présenter des mailles polygonales;

- la structure maillée peut présenter des mailles carrées ;

- la structure maillée peut présenter des mailles circulaires ;

- les mailles peuvent présenter des bords sensiblement perpendiculaires aux deux faces sensiblement planes et parallèles de la structure maillée ;

- les panneaux de parement peuvent être creux ;

- un pavé d'absorption acoustique peut être disposé à l'intérieur d'au moins une maille de la structure maillée ;

- ledit au moins un pavé d'absorption acoustique peut comprendre un matériau absorbant acoustique disposé selon au moins une couche parallèle aux panneaux de parement ;

- le pavé d'absorption acoustique peut comprendre une couche d'un matériau et de dimensions choisis pour résonner à une fréquence déterminée ;

- les panneaux de parement peuvent présenter une fréquence de respiration, et le matériau et les dimensions de la couche du pavé d'absorption acoustique peuvent être choisis pour résonner sensiblement à la fréquence de respiration ;

- plusieurs pavés dont le matériau et les dimensions de la couche ont été choisis pour résonner à des fréquences différentes peuvent être disposés à l'intérieur de la structure maillée pour augmenter l'isolation acoustique du panneau auxdites fréquences ;

- la structure maillée peut présenter une densité supérieure à 150 kg/m$^3$, de préférence comprise entre 150 et 2000 kg/m$^3$, typiquement entre 150 et 750 kg/m$^3$ ;

- la structure maillée peut présenter une hauteur comprise entre 10 et 200 millimètres, de préférence entre 10 et 100 millimètres, typiquement entre 10 et 50 millimètres ;

- la structure maillée peut être choisie parmi un composite carbone-époxy trois couches de quatre plis chacune, chaque couche étant séparée par une couche d'un matériau pris dans le groupe constitué par une mousse polyuréthane, une mousse de caoutchouc à cellules fermées, un matériau thermoplastique, du bois, un matériau composite pris dans le groupe constitué par le verre-époxy et le verre phénolique ;

- le matériau des panneaux de parement peut être choisi parmi le verre-époxy, le verre phénolique, le polychloroprène, le carbone-époxy, l'aluminium, le caoutchouc et les silicones ;

- le matériau absorbant acoustique du pavé d'absorption acoustique peut être choisi parmi la mousse mélamine, le polyuréthane, la laine de verre, les polyimides et les matériaux fibreux ;

- le matériau de la couche du pavé d'absorption acoustique, choisi pour résonner à une fréquence déterminée, peut être choisi parmi l'aluminium, le caoutchouc, les silicones, les composites à base de carbone, le verre, une résine époxy et une résine phénolique ; et

- le panneau d'isolation acoustique peut comprendre, en face d'au moins un des trous traversant formant le maillage de la structure, au moins une ouverture dans un panneau de parement, de diamètre et de hauteur de col choisis pour absorber une longueur d'onde déterminée.

L'invention se rapporte également à un pavé d'absorption acoustique destiné à être disposé dans une maille d'un panneau d'isolation acoustique précédent, le pavé comprenant au moins un composite constitué par une première couche de matériau absorbant acoustique, sur laquelle est disposée une deuxième couche d'un matériau et de dimensions choisis pour résonner sensiblement à une fréquence déterminée, sur laquelle est disposée une troisième couche de matériau absorbant acoustique.

Selon d'autres modes de réalisation :

- la fréquence déterminée peut être sensiblement la fréquence de respiration des panneaux de parement du panneau d'isolation acoustique dans lequel il est destiné à être disposé ; et

- le matériau absorbant acoustique peut être choisi parmi la mousse mélamine, le polyuréthane, la laine de verre, les poly-imides et les matériaux fibreux. Le matériau de la couche du pavé d'absorption acoustique, choisi pour résonner à une fréquence déterminée, peut être choisi parmi l'aluminium, le caoutchouc, les silicones, les composites à base de carbone, le verre, une résine époxy et une résine phénolique.

D'autres caractéristiques et avantages de l'invention apparaîtront à la lecture de la description détaillée d'exemples de réalisation, en liaison avec les dessins annexés qui représentent, respectivement :

- la figure 1, une vue schématique en perspective d'un panneau d'isolation selon l'invention;
- la figure 2, un graphique présentant l'effet de la structure maillée selon l'invention sur l'efficacité d'atténuation d'un panneau en fonction de différentes fréquences de bruit;
- la figure 3, une vue schématique en perspective d'un dispositif d'atténuation de bruit supplémentaire;
- la figure 4, un graphique illustrant l'effet du dispositif d'absorption acoustique supplémentaire de la figure 3 sur le taux d'absorption du bruit en fonction de différentes fréquences de bruit ; et
- les figures 5 et 6, des vues schématiques en coupe d'un panneau d'isolation acoustique selon l'invention dont un panneau de parement porte des résonateurs pour l'absorption de fréquences de bruit déterminées.

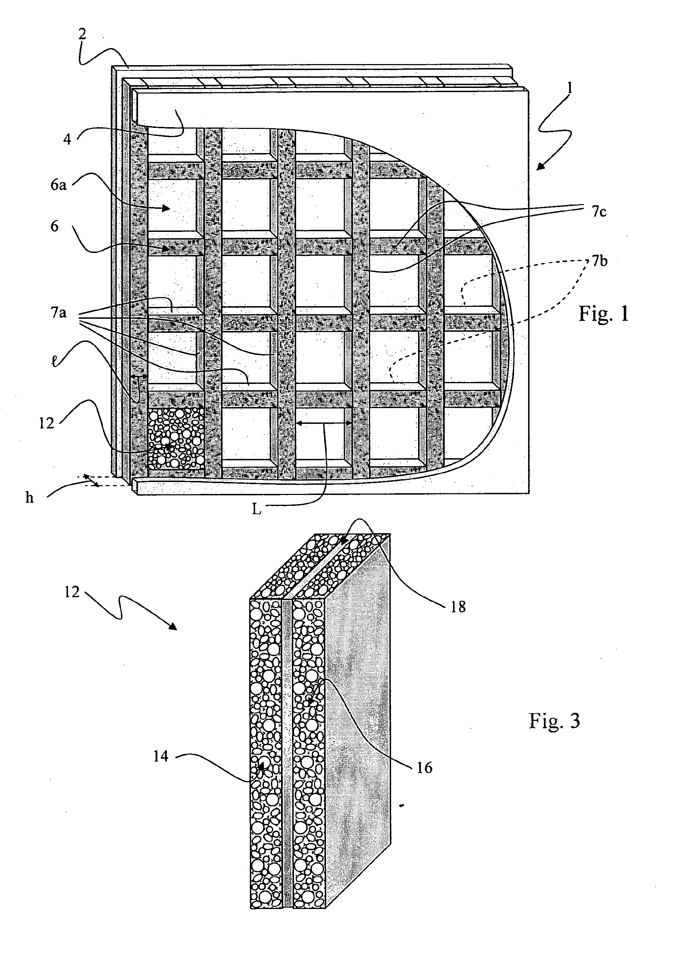

Un mode de réalisation d'un panneau d'isolation selon l'invention est représenté en figure 1. Il comprend deux panneaux de parement 2 et 4 entre lesquels est disposée une structure maillée pleine sensiblement plane 6 et présentant deux faces 7b, 7c sensiblement planes et parallèles solidaires des deux panneaux de parement 2 et 4. De préférence, la structure maillée comprend au moins une couche d'un matériau absorbant acoustique, cette couche étant, de préférence, disposée parallèlement aux panneaux de parement. La structure maillée peut être réalisée en divers matériaux, tels que des mousses denses à cellules fermées. Selon un mode de réalisation préféré, la structure maillée est constituée d'au moins un composite de carbone époxy trois couches de quatre plis chacune, avec de la mousse polyuréthane entre chaque couche. Selon un autre mode de réalisation, la structure maillée est constituée de mousses caoutchouc à cellules fermées, de densité égale à 150 kilogramme par mètre cube (kg/m³). Plus généralement, la structure maillée est choisie pour présenter une densité supérieure à 150 kg/m³ et n'excédant pas 2000 kg/m³.

La structure 6 comprend des trous traversants 6a formant un maillage, les mailles 6a étant, de préférence, carrées. Elles présentent ainsi des bords 7a sensiblement perpendiculaires aux faces 7b et 7c de la structure maillée et perpendiculaires aux panneaux de parement 2 et 4 avec lesquels les faces 7b et 7c sont solidaires.

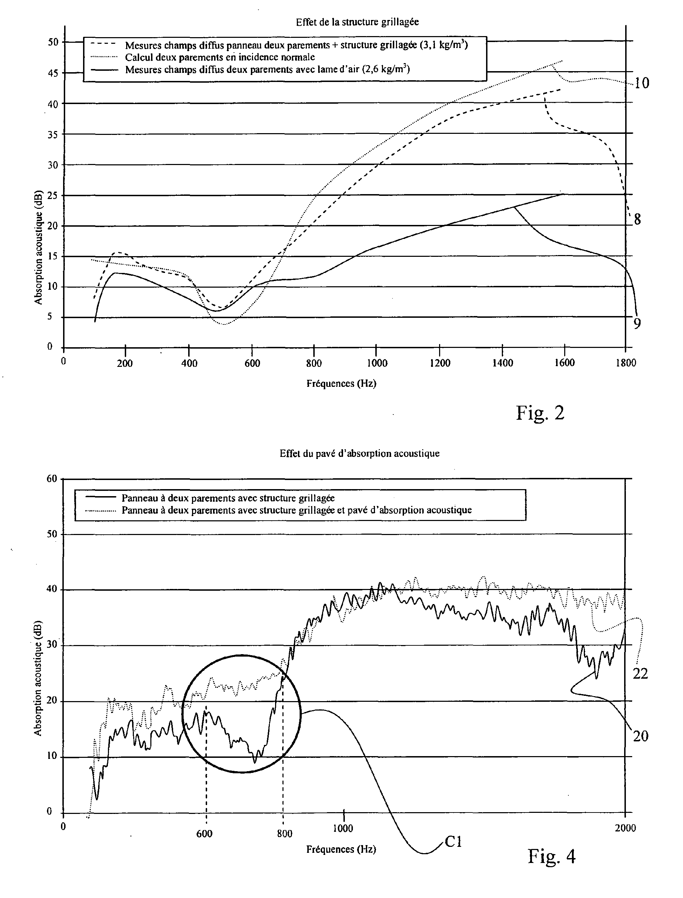

Comme le montre le graphique de la figure 2, la présence de la structure maillée précédente entre deux panneaux de parement améliore l'absorption acoustique par le panneau selon l'invention (ligne tiretée 8) par rapport à un panneau de type connu (ligne continue 9) constitué par deux panneaux de parement entre lesquels se trouve une lame d'air. Cette amélioration peut aller jusqu'à 168% pour un bruit de fréquence de 1600Hz. En effet, lorsqu'un panneau d'isolation de type connu absorbe 25 décibels à 1600 Hz, un panneau 1 selon l'invention absorbe environ 42 décibels.

D'autre part, en comparant la courbe d'absorption d'un panneau 1 selon l'invention soumis à une excitation acoustique de type diffus (ligne tiretée 8) à une courbe théorique calculée pour un panneau d'isolation de type connu soumis à une excitation acoustique dont l'incidence est normale au panneau (ligne pointillée 10), on remarque que la structure maillée a pour effet de "redresser" l'excitation acoustique de type diffus et d'agir comme si le panneau était excité avec une incidence normale. En d'autres termes, la présence de la structure maillée plane entre les deux panneaux de parement a pour effet de "polariser" le champ acoustique en transformant un champ de type diffus en un champ de type sensiblement normal au panneau 1. Ce faisant, la structure maillée plane augmente significativement la performance d'absorption acoustique du panneau.

Selon un autre aspect de l'invention, un dispositif d'absorption acoustique supplémentaire peut être disposé à l'intérieur d'une ou plusieurs mailles de la structure grillagée, et de préférence toutes les mailles de la structure, afin d'améliorer les performances d'absorption du panneau d'isolation acoustique. Un tel dispositif peut être constitué de tout matériau absorbant acoustique connu.

Un mode de réalisation préférentiel d'un tel dispositif d'absorption acoustique supplémentaire selon l'invention est représenté en figure 3. Il est constitué par un pavé d'absorption acoustique 12 comprenant deux couches 14-16 de matériau absorbant acoustique, entre lesquelles est disposée une couche 18 d'un matériau et de dimensions choisis pour résonner sensiblement à une fréquence déterminée. Cette fréquence est, de préférence, la fréquence de respiration des panneaux de parement 2 et 4 (voir figure 1). La fréquence de respiration des deux panneaux de parement 2 et 4 correspond à la fréquence à laquelle le panneau d'isolation acoustique atténue le moins le bruit. Cette fréquence, pour une double paroi, se calcule comme suit :

$$f_R = \frac{1}{2\pi} \times \sqrt{\frac{\rho_0 \times (\rho_{S1} + \rho_{S2}) \times c^2}{d \times \rho_{S1} \times \rho_{S2}}}$$

Où :

- $\rho_0$ est la densité de l'air ;
- $\rho_{S1}$ et $\rho_{S2}$ sont la densité surfacique de chacun des panneaux de parement ;
- c est la vitesse du son dans l'air ;
- d est la distance entre les deux panneaux de parement.

Cette fréquence correspond à une absorption moindre du bruit. Ce phénomène est illustré en figure 4 où l'on peut observer qu'un panneau d'isolation acoustique selon l'invention comprenant deux panneaux de parement et une structure maillée (ligne continue 20) présente une qualité d'atténuation du bruit moindre pour des fréquences de bruit allant d'environ 600 Hz à environ 800 Hz.

Si cette fréquence correspond à la fréquence de résonnance d'un des panneaux de parement, ce phénomène de diminution de l'absorption acoustique peut être encore plus marqué en fonction du mode vibratoire des panneaux.

Le Demandeur a constaté que, en remplissant les mailles de la structure maillée avec du matériau absorbant acoustique dans lequel est disposée une couche d'un matériau et de dimension choisis pour résonner à la bande de fréquences des panneaux de parement, les performances d'absorption du panneau d'absorption acoustique ne diminuent pas et sont compensées par les pavés. Ceci est illustré en figure 4.

Deux panneaux d'absorption acoustique identiques ont été réalisés et comprennent :

- un premier panneau de parement en verre époxy deux plis de 0,6 mm d'épaisseur et un deuxième panneau de parement en polychloroprène de 0,6 mm d'épaisseur, et
- une structure maillée plane de 18 mm de hauteur h intercalée entre les deux panneaux de parement.

La structure maillée est en composite carbone-époxy trois couches de quatre plis chacune, une couche de mousse polyuréthane étant intercalée entre deux couches de composite carbone-époxy. La structure maillée présente une hauteur h de 18 mm, des mailles carrées de d'environ 90 mm de côté L, et des faces 7b, 7c de 10 millimètres de largeur ℓ. Plus généralement, la largeur ℓ des faces 7b et 7c est adaptée pour permettre une fixation efficace des panneaux de parement. De préférence, cette largeur ℓ est comprise entre 1 à 20 millimètres.

A l'intérieur des mailles de l'un des panneaux d'isolation acoustique ainsi réalisés, sont disposés des pavés d'absorption acoustique selon l'invention. Plus précisément, chaque pavé d'absorption acoustique comprend une première couche de 9 mm de mélamine (la couche 14 de la figure 3), une couche de 0,5 mm d'épaisseur d'aluminium (couche 18 de la figure 3) et une deuxième couche de mélamine de 6 mm d'épaisseur. Le tout est collé sur la face du panneau de parement en verre époxy. La couche d'aluminium de 0,5 mm d'épaisseur résonne à environ 650 Hz.

Le cercle C1 de la figure 4 montre l'effet, sur le creux d'atténuation autour de la fréquence de résonnance, de pavés d'absorption acoustique dans un panneau selon l'invention, par rapport à un même panneau dépourvu desdits pavés. Lorsque ces deux panneaux sont soumis à un bruit de fréquence variable (voir la figure 4), on constate que le premier panneau, dépourvu de pavé d'absorption acoustique, présente un creux d'atténuation compris entre environ 600 Hz et 800 Hz, alors que le panneau muni des pavés d'absorption acoustique ne présente pas ce creux d'atténuation du bruit (voir la ligne pointillée 22).

Le matériau et les dimensions de la couche 18 peuvent être choisis pour résonner à une fréquence déterminée différente de la fréquence de résonnance.

Il est également envisageable de disposer, à l'intérieur de la structure maillée d'un panneau d'isolation acoustique selon l'invention, des pavés différents, dont le matériau et les dimensions de la couche ont été choisis pour résonner à des fréquences différentes. Ceci permet d'augmenter l'isolation acoustique du panneau auxdites différentes fréquences.

Il est donc possible de configurer le panneau d'isolation en fonction de son utilisation et de l'environnement spécifique dans lequel il va être installé.

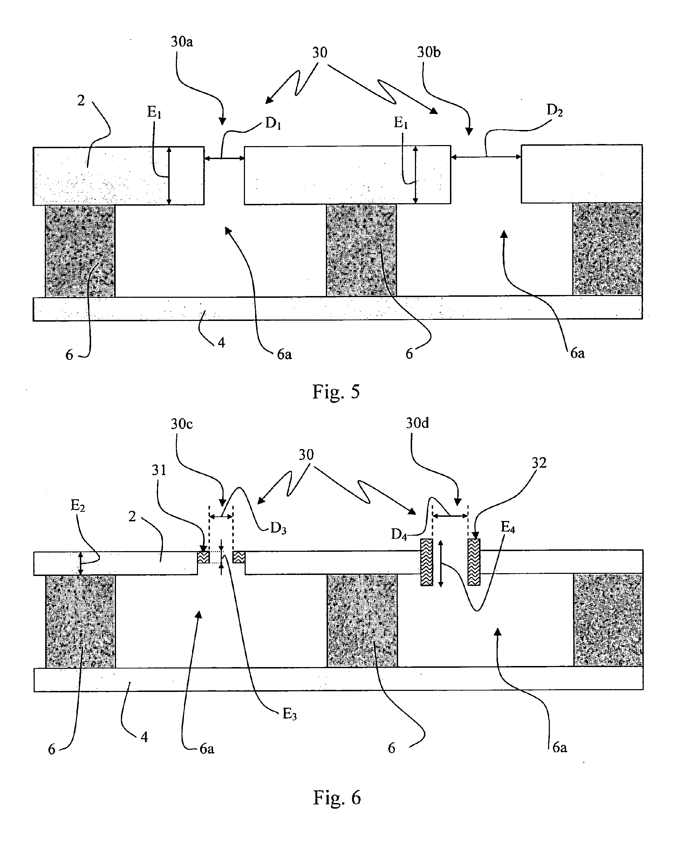

Selon un autre aspect de l'invention, illustré en figures 5 et 6, le panneau d'isolation acoustique selon l'invention comprend au moins un résonateur acoustique 30 comprenant une ouverture dans un panneau de parement 2 en face de l'un des trous traversant 6a formant le maillage de la structure 6. Le résonateur permet d'absorber une longueur d'onde déterminée et, de préférence, la longueur d'onde de respiration.

La longueur de col E et le diamètre D de l'ouverture de chaque résonateur sont choisis en fonction de la longueur d'onde à absorber.

Selon un premier mode de réalisation, illustré en figure 5, il est possible de choisir un panneau de parement d'une épaisseur déterminée $E_1$ égale à la longueur de col souhaitée, puis de réaliser des ouvertures 30a, 30b de diamètres $D_1$, $D_2$ différents pour absorber des longueurs d'onde différentes.

Pour ne pas alourdir le panneau d'isolation selon l'invention en choisissant un panneau de parement épais, un deuxième mode de réalisation, illustré en figure 6, consiste à réaliser dans un panneau de parement d'épaisseur $E_2$, des ouvertures 30c, 30d dans lesquelles sont insérés des tubes 31, 32 de longueur $E_3$, $E_4$ et de diamètre $D_3$, $D_4$ adaptés. Dans l'exemple illustré, $E_3$ est inférieure $E_2$, et $E_4$ est supérieure à $E_2$.

Dans les exemples décrits, les ouvertures sont de section circulaire, mais d'autres formes pourraient être envisagées.

De préférence, plusieurs résonateurs 30 précédents sont disposés en face de chaque trou traversant 6a de la structure 6. En outre, les deux panneaux de parement 2-4 peuvent porter des résonateurs.

L'invention n'est pas limitée aux exemples de réalisation décrits et représentés.

Selon d'autres modes de réalisation :

- les mailles peuvent être de formes différentes : formes polygonales (hexagone ou octogone par exemple) ou circulaire ;

- les panneaux de parement peuvent être creux afin d'alléger le panneau d'isolation acoustique. Dans ce cas, les phénomènes de respiration peuvent être augmentés, et il est alors souhaitable d'ajouter des pavés d'absorption acoustique dans les mailles de la structure maillée ;

- la structure maillée peut présenter une densité supérieure à 150 kg/m³, de préférence comprise entre 150 et 2000 kg/m³, typiquement entre 150 et 750 kg/m³ ;

- la structure maillée présente une hauteur comprise entre 10 et 200 millimètres, de préférence entre 10 et 100 millimètres, typiquement entre 10 et 50 millimètres ;

- la structure maillée peut être choisie parmi une mousse de caoutchouc à cellules fermées, un matériau thermoplastique, du bois, un matériau composite pris dans le groupe constitué par le verre-époxy et le verre phénolique ;

- le matériau des panneaux de parement peut être choisi parmi le verre-époxy, le verre phénolique, le polychloroprène, le carbone-époxy, l'aluminium, le caoutchouc et les silicones ;

- le matériau absorbant acoustique du pavé d'absorption acoustique peut être choisi parmi la mousse mélamine, le polyuréthane, la laine de verre, les polyimides et les matériaux fibreux ;

- le matériau résonnant du pavé d'absorption acoustique peut être choisi parmi l'aluminium, le caoutchouc, les silicones, les composites à base de carbone, le verre, une résine époxy et une résine phénolique.

- l'épaisseur du panneau d'isolation acoustique peut être choisie entre 15 et 100 mm. Plus l'épaisseur du panneau augmente et plus la fréquence de respiration diminue ;

- dans le cas d'un quadrillage en mousse caoutchouc, ce sont les panneaux de parements qui apportent la rigidité nécessaire à la tenue du panneau. La masse surfacique des panneaux de parements influence les performances finales. Ainsi, plus la masse surfacique des panneaux augmente meilleure est l'atténuation du bruit. Cependant, plus la masse surfacique des panneaux augmente, plus la fréquence de respiration diminue.

Le panneau d'isolation acoustique selon l'invention présente une qualité d'atténuation du bruit significativement améliorée par rapport aux panneaux d'isolation acoustique de l'état de la technique. Il permet ainsi une absorption acceptable avec un panneau léger comprenant simplement deux panneaux de parements et une structure maillée plane.

Si le poids n'est pas un facteur limitant et/ou que l'efficacité d'absorption du bruit doit être optimisée, des pavés d'absorption acoustiques peuvent être placés dans les mailles de la structure.

Si la rigidité n'est pas un facteur limitant, la structure maillée peut être simplement constituée d'une mousse de densité supérieure ou égale à 150 kg/m$^3$ et n'excédant pas 2000 kg/m$^3$.

Le pavé d'absorption acoustique 12 selon la présente invention peut être utilisé pour améliorer l'efficacité de panneaux d'isolation acoustique de l'état de la technique. Il peut, par exemple, être utilisé dans le panneau selon le document WO 2007/080335 à la place du matériau granulaire léger, ou dans le panneau selon le document JP 1037341 entre les tiges métalliques rigides de la structure grillagée tridimensionnelle disposée entre les panneaux de parement.

Les panneaux selon l'invention peuvent être utilisés préférentiellement dans les cloisons arrière pour hélicoptères, les plafonds pour hélicoptères ou tout autre panneau d'habillage, des panneaux d'habillage pour avions, etc.

## Revendications

1. Panneau d'isolation acoustique comprenant deux panneaux de parement (2, 4), présentant une fréquence de respiration propre, séparés par une structure pleine (6) sensiblement plane et présentant deux faces (7b, 7c) sensiblement planes et parallèles, chacune d'elles étant solidaire d'un panneau de parement, ladite structure (6) comprenant des trous traversants (6a) formant un maillage, de telle sorte que la structure maillée participe à la fonction d'absorption du bruit, un pavé d'absorption acoustique (12) étant disposé à l'intérieur d'au moins une maille (6a) de la structure maillée (6), **caractérisé en ce que** le pavé d'absorption acoustique (12) comprend une couche (18), parallèle aux panneaux de parement (2, 4), d'un matériau et de dimensions choisis pour résonner sensiblement à la fréquence de respiration.

2. Panneau d'isolation acoustique selon la revendication 1, dans lequel la structure maillée (6) comprend, en outre, au moins un matériau absorbant acoustique.

3. Panneau d'isolation acoustique selon la revendication 2, dans lequel la structure maillée (6) comprend au moins une couche d'un matériau absorbant acoustique.

4. Panneau d'isolation acoustique selon l'une quelconque des revendications 1 à 3, dans lequel la structure maillée présente des mailles (6a) circulaires ou polygonales, de préférence carrées.

5. Panneau d'isolation acoustique selon l'une quelconque des revendications 1 à 4, dans lequel les mailles (6a) présentent des bords (7a) sensiblement perpendiculaires aux deux faces (7b, 7c) sensiblement planes et parallèles de la structure maillée (6).

6. Panneau d'isolation acoustique selon l'une quelconque des revendications 1 à 5, dans lequel les panneaux de parement (2, 4) sont creux.

7. Panneau d'isolation acoustique selon l'une quelconque des revendications 1 à 6, dans lequel plusieurs pavés, dont le matériau et les dimensions de la couche ont été choisis pour résonner à des fréquences différentes, sont disposés à l'intérieur de la structure maillée pour augmenter l'isolation acoustique du panneau auxdites fréquences.

8. Panneau d'isolation acoustique selon l'une quelconque des revendications 1 à 7, dans lequel la structure maillée (6) présente une densité supérieure à 150 kg/m$^3$, de préférence comprise entre 150 et 2000 kg/m$^3$, typiquement entre 150 et 750 kg/m$^3$.

9. Panneau d'isolation acoustique selon l'une quelconque des revendications 1 à 8, dans lequel la structure maillée (6) présente une hauteur (h) comprise entre 10 et 200 millimètres, de préférence entre 10 et 100 millimètres, typiquement entre 10 et 50 millimètres.

10. Panneau d'isolation acoustique selon l'une quelconque des revendications 1 à 9, dans lequel la structure maillée (6) est choisie parmi un composite carbone-époxy trois couches de quatre plis chacune, chaque couche étant séparée par une couche de mousse polyuréthane, une mousse de caoutchouc à cellules fermées, un matériau thermoplastique, du bois, un matériau composite pris dans le groupe constitué par le verre-époxy et le verre phénolique.

11. Panneau d'isolation acoustique selon l'une quelconque des revendications 1 à 10, dans lequel le matériau des panneaux de parement (2, 4) est choisi parmi le verre-époxy, le verre phénolique, le polychloroprène, le carbone-époxy, l'aluminium, le caoutchouc et les silicones.

12. Panneau d'isolation acoustique selon l'une quelconque des revendications 1 à 11, dans lequel le matériau absorbant acoustique du pavé d'absorption acoustique (12) est choisi parmi la mousse mélamine, le polyuréthane, la laine de verre, les polyimides et les matériaux fibreux.

13. Panneau d'isolation acoustique selon l'une quelconque des revendications 1 à 12, dans lequel le matériau de la couche (18) du pavé d'absorption acoustique (12), choisi pour résonner à une fréquence déterminée, est choisi parmi l'aluminium, le caoutchouc, les silicones, les composites à base de carbone, le verre, une résine époxy et une résine phénolique.

14. Panneau d'isolation acoustique selon l'une quelconque des revendications 1 à 13, comportant, en face d'au moins un des trous traversant (6a) formant le maillage de la structure (6), au moins une ouverture (30a, 30b, 30c, 30d) dans un panneau de parement (2, 4), de diamètre ($D_1$, $D_2$, $D_3$, $D_4$) et de hauteur de col ($E_1$, $E_3$, $E_4$) choisis pour absorber une longueur d'onde déterminée.

**Patentansprüche**

1. Schalldämmplatte, die zwei Außenplatte (2, 4) aufweist, die eine Atmungseigenfrequenz aufweisen, die durch eine im Wesentlichen ebene Vollstruktur (6) getrennt sind, die zwei, im Wesentlichen ebene und parallele Flächen (7b, 7b) aufweist, wobei jede von diesen mit einer Außenplatte fest verbunden ist, wobei die Struktur (6) Durchgangslöcher (6a), die eine Maschenausgestaltung bilden, aufweist, und zwar in der Weise, dass die Maschenstruktur an der Schallabsorptionsfunktion beteiligt ist, wobei ein Schallabsorptionsblock (12) im Inneren von zumindest einer Masche (6a) der Maschenstruktur (6) angeordnet ist, **dadurch gekennzeichnet, dass** der Schallabsorptionsblock (12) eine zu den Außenplatten (2, 4) parallele Schicht (18) aus einem Material und mit ausgewählten Dimensionen, um im Wesentlichen mit der Atmungsfrequenz in Resonanz zu stehen, aufweist.

2. Schalldämmplatte nach Anspruch 1, wobei die Maschenstruktur (6) ferner zumindest ein schallabsorbierendes Material aufweist.

3. Schalldämmplatte nach Anspruch 2, wobei die Maschenstruktur (6) zumindest eine Schicht aus einem schallabsorbierenden Material aufweist.

4. Schalldämmplatte nach einem der Ansprüche 1 bis 3, wobei die Maschenstruktur kreisförmige oder polygonale, vorzugsweise viereckige, Maschen (6a) aufweist.

5. Schalldämmplatte nach einem der Ansprüche 1 bis 4, wobei die Maschen (6a) Kanten (7a) aufweisen, die im Wesentlichen senkrecht zu den zwei Flächen (7b, 7c) im Wesentlichen eben und parallel zu der Maschenstruktur (6) sind.

6. Schalldämmplatte nach einem der Ansprüche 1 bis 5, wobei die Außenplatten (2, 4) hohl sind.

7. Schalldämmplatte nach einem der Ansprüche 1 bis 6, wobei mehrere Blöcke, deren Material und deren Schichtabmessungen ausgewählt wurden, um mit unterschiedlichen Frequenzen in Resonanz zu stehen, im Inneren der Maschenstruktur angeordnet sind, um die Schalldämmung der Platte gegenüber den Frequenzen zu erhöhen.

8. Schalldämmplatte nach einem der Ansprüche 1 bis 7, wobei die Maschenstruktur (6) eine Dichte von größer als 150 kg/m$^3$, vorzugsweise zwischen 150 und 2000 kg/m$^3$, und typischerweise zwischen 150 und 750 kg/m$^3$ aufweist.

9. Schalldämmplatte nach einem der Ansprüche 1 bis 8, wobei die Maschenstruktur (6) eine Höhe (h) zwischen 10 und 200 Millimeter, vorzugsweise zwischen 10 und 100 Millimeter, und typischerweise zwischen 10 und 50 Millimeter aufweist.

10. Schalldämmplatte nach einem der Ansprüche 1 bis 9, wobei die Maschenstruktur (6) ausgewählt wurde aus: einem Kohlenstoff-Epoxid-Composite mit drei Schichten von vier Lagen jeweils, wobei jede Schicht durch eine Polyurethanschaumschicht getrennt ist, einem Kautschukschaum mit geschlossenen Zellen, einem Thermoplastmaterial, Holz, einem Composite-Material, das aus der Gruppe ausgewählt wurde, die durch Glas-Epoxid und Phenolglas gebildet ist.

11. Schalldämmplatte nach einem der Ansprüche 1 bis 10, wobei das Material der Außenplatten (2, 4) aus Glas-Epoxid, Phenolglas, Polychloropren, Kohlenstoff-Epoxid, Aluminium, Kautschuk und Silikonen ausgewählt ist.

12. Schalldämmplatte nach einem der Ansprüche 1 bis 11, wobei das Schallabsorptionsmaterial des Schallabsorptionsblocks (12) aus Melaminschaum, Polyurethan, Glaswolle, Polyimiden und Fasermaterialien ausgewählt ist.

**13.** Schalldämmplatte nach einem der Ansprüche 1 bis 12, wobei das Material der Schicht (18) des Schallabsorptionsblocks, das ausgewählt wurde, um mit einer vorbestimmten Frequenz in Resonanz zu treten, aus Aluminium, Kautschuk, Silikonen, Composites auf der Basis von Kohlenstoff, Glas, einem Epoxidharz und einem Phenolharz ausgewählt ist.

**14.** Schalldämmplatte nach einem der Ansprüche 1 bis 13, wobei diese gegenüber von zumindest einem der Durchgangslöcher (6a), die die Maschenausgestaltung der Struktur (6) bilden, zumindest eine Öffnung (30a, 30b, 30c, 30d) in einer Außenplatte (2, 4) mit dem Durchmesser ($D_1$, $D_2$, $D_3$, $D_4$) und der Jochhöhe ($E_1$, $E_3$, $E_4$,) aufweist, die ausgewählt sind, um eine vorbestimmte Wellenlänge zu absorbieren.

**Claims**

**1.** An acoustic insulation panel comprising two facing panels (2,4) having a natural respiration frequency, said facing panels being separated by a solid structure (6) that is substantially flat and has two faces (7b,7c) that are substantially flat and parallel, each of them being secured to a facing panel, said structure (6) comprising through-holes (6a) forming a mesh, so that the mesh structure helps with the noise-absorption function, an acoustic absorption block (12) being placed inside at least one mesh (6a) of the mesh structure (6), **characterized in that** the acoustic absorption block (12) comprises a layer (18), parallel to the facing panels (2,4), of a material and with dimensions chosen to resonate substantially at the respiration frequency.

**2.** The acoustic insulation panel as claimed in claim 1, wherein the mesh structure (6) also comprises at least one acoustic absorbent material.

**3.** The acoustic insulation panel as claimed in claim 2, wherein the mesh structure (6) comprises at least one layer of an acoustic absorbent material.

**4.** The acoustic insulation panel as claimed in any of claims 1 to 3, wherein the mesh structure has meshes (6a) that are circular or polygonal, preferably square.

**5.** The acoustic insulation panel as claimed in any claims 1 to 4, wherein the meshes (6) have edges (7a) that are substantially perpendicular to the two substantially flat and parallel faces (7b, 7c) of the mesh structure (6).

**6.** The acoustic insulation panel as claimed in any of claims 1 to 5, wherein the facing panels (2,4) are hollow.

**7.** The acoustic insulation panel as claimed in any of claims 1 to 6, wherein several blocks, of which the material and the dimensions of the layer have been chosen to resonate at different frequencies, are placed inside the mesh structure in order to increase the acoustic insulation of the panel at said frequencies.

**8.** The acoustic insulation panel as claimed in any of claims 1 to 7, wherein the mesh structure (6) has a density greater than 150 kg/m$^3$, preferably of between 150 and 2000 kg/m$^3$, typically between 150 and 750 kg/m$^3$.

**9.** The acoustic insulation panel as claimed in any of claims 1 to 8, wherein the mesh structure (6) has a height (h) of between 10 and 200 millimeters, preferably between 10 and 100 millimeters, typically between 10 and 50 millimeters.

**10.** The acoustic insulation panel as claimed in any of claims 1 to 9, wherein the mesh structure (6) is chosen from a carbon-epoxy composite with three layers of four plies each, each layer being separated by a layer of polyurethane foam, a closed-cell rubber foam, a thermoplastic material, wood, a composite material selected from the group consisting of glass-epoxy and glass phenolic.

**11.** The acoustic insulation panel as claimed in any of claims 1 to 10, wherein the material of the facing panels (2,4) is chosen from glass-epoxy, glass phenolic, polychloroprene, carbon-epoxy, aluminum, rubber and silicones.

**12.** The acoustic insulation panel as claimed in any of claims 1 to 11, wherein the acoustic absorbent material of the acoustic absorption block (12) is chosen from melamine foam, polyurethane, glass wool, polyimides and fibrous materials.

**13.** The acoustic insulation panel as claimed in any of claim 1 to 12, wherein the material of the layer (18) of the acoustic absorption block (12), chosen to resonate at a determined frequency, is chosen from aluminum, rubber, silicones, carbon-based composites, glass, an epoxy resin and a phenolic resin.

**14.** The acoustic insulation panel according to any of claims 1 to 13 comprising, facing at least one of the through-holes (6a) forming the mesh of the structure (6), at least one aperture (30a, 30b, 30c, 30d) in a facing panel (2,4), of diameter (D1, D2, D3, D4) and with a neck height (E1, E3, E4) chosen to absorb a determined wavelength.

Fig. 1

Fig. 3

Effet de la structure grillagée

Fig. 2

Effet du pavé d'absorption acoustique

Fig. 4

Fig. 5

Fig. 6

**EP 2 274 740 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007080335 A
- JP 10037341 B
- US 1865424 A
- JP 1037341 A